# EUROPÄISCHE PATENTANMELDUNG

(11) **EP 2 380 790 A2**
(43) Veröffentlichungstag der Anmeldung: **26.10.2011**
(21) Anmeldenummer: 11156589.1
(22) Anmeldetag: 02.03.2011
(51) Int. Cl.: B60T 7/12, B60T 13/66, B60T 13/74, B60T 17/18, B60W 10/18, B60W 30/18

(54) **Verfahren zur Unterstützung des Fahrers eines Kraftfahrzeugs bei Anfahrvorgängen**

(30) Priorität: 22.04.2010 DE 102010028074
(71) Anmelder: ZF Friedrichshafen AG, 88038 Friedrichshafen (DE)
(72) Erfinder: Mair, Roland, 88069, Tettnang (DE)

(57) **Zusammenfassung**

Im Rahmen des Verfahrens zur Unterstützung des Fahrers eines Kraftfahrzeugs, insbesondere eines Kraftfahrzeugs umfassend ein automatisiertes Getriebe oder ein Automatgetriebe bei Anfahrvorgängen wird erkannt, ob das Haltemoment des Fahrzeugs größer ist, als das Motorsaugmoment im aktuellen Gang, wobei bei Erkennung eines aktuellen Haltemomentes, das größer ist, als das Motorsaugmoment im aktuellen Gang bzw. für den Fall, dass kein Gang eingelegt bzw. angefordert ist, im ersten Vorwärtsgang, ein Signal ausgegeben wird, welches den Fahrer auf die erforderliche Benutzung der Feststellbremse des Fahrzeugs hinweist und/oder ein Signal an die Bremssteuerung des Fahrzeugs zum Einsteuern von Bremsdruck in die Betriebsbremse und/oder in die Feststellbremse übermittelt wird.

## Beschreibung

Die Erfindung bezieht sich auf ein Verfahren zur Unterstützung des Fahrers eines Kraftfahrzeugs, insbesondere eines Kraftfahrzeugs umfassend ein automatisiertes Getriebe oder ein Automatgetriebe bei Anfahrvorgängen, gemäß dem Oberbegriff des Patentanspruchs 1.

Bei Kraftfahrzeugen, insbesondere bei schwach motorisierten Kraftfahrzeugen oder bei Kraftfahrzeugen, umfassend ein Handschaltgetriebe, ein automatisiertes Getriebe oder ein Automatgetriebe mit geringer Anfahrübersetzung, was beispielsweise aufgrund der geringen Gangzahl der Fall sein kann, kann das Problem auftreten, dass ein Anfahren unter bestimmten Randbedingungen allein mit dem Motorsaugmoment nicht möglich ist. Um in einer derartigen Situation ein Anfahren zu ermöglichen, muss zusätzlich "Turbomoment", d.h. Ladedruck aufgebaut werden. In nachteiliger Weise baut sich der Ladedruck durch Belastung des Motors mit zeitlicher Verzögerung bzw. mit einer Anstiegsgeschwindigkeit auf, so dass es einen Zeitraum gibt, in dem das Fahrzeug zurückrollen kann, da die Antriebskraft geringer als der Fahrwiderstand ist.

In der Regel ist es für den Fahrer vor einem Anfahrvorgang nicht ersichtlich, ob das Fahrzeug zurückrollen wird und er die Feststellbremse benutzen muss und ab welchem Zeitpunkt er die Feststellbremse lösen kann, ohne dass das Fahrzeug zurückrollt.

Dieses Problem besteht bei Fahrzeugen mit einer Anfahrhilfe oder einer Rückrollverhinderung ("Hillholder") nicht, da ein unerwünschtes Rückrollen beispielsweise durch Zusammenwirken von Getriebe und Betriebsbremse verhindert wird. Voraussetzung für die meisten Anfahrhilfen bei Kraftfahrzeugen ist jedoch ein entsprechend ausgestattetes Bremssystem, was bei der Mehrheit der Fahrzeuge nicht der Fall ist. Zudem sind Anfahrhilfen bei den meisten Kraftfahrzeugen aufpreispflichtige Optionen.

Aus der DE 10 200 783 C2 ist eine Anfahrhilfesteuerungsvorrichtung zur Verwendung bei einem Fahrzeug umfassend ein Handschaltgetriebe, eine Feststellbremse, insbesondere eine elektromechanische oder hydraulische Feststellbremse, eine oder mehrere Erfassungseinrichtungen zum Erfassen von Signalen, eine Auswerteeinheit zum Bilden eines Anfahrwunschsignals und eine Steuereinheit. Hierbei wird bei Auftreten eines Anfahrwunschsignals eine Stelleinrichtung von der Steuereinheit derart angesteuert, dass die Feststellbremse gelöst wird, wobei die Auswerteeinheit ein Anfahrrucksignal des Fahrzeugs zum Bestimmen des Anfahrzeitpunkts auswertet; von der Auswerteeinheit werden die Parameter Neigungswinkel und Radmoment zum Feststellen eines zu frühen und/oder zu späten Öffnens der Feststellbremse ausgewertet.

Durch die bekannte Anfahrhilfesteuerungsvorrichtung soll durch Auswerten weniger Signale ein Anfahrvorgang am Hang erleichtert werden, da durch die Anfahrhilfesteuerungsvorrichtung ein Anfahrwunsch erkannt wird. In nachteiliger Weise wird jedoch ein kompliziert aufgebautes, von einer Steuereinheit steuerbares Bremssystem benötigt.

Der vorliegenden Erfindung liegt die Aufgabe zugrunde, ein Verfahren zur Unterstützung des Fahrers eines Kraftfahrzeugs, insbesondere eines Kraftfahrzeugs umfassend ein automatisiertes Getriebe oder ein Automatgetriebe bei Anfahrvorgängen anzugeben, durch dessen Durchführung vorzugsweise ohne die Notwendigkeit einer Anfahrhilfe oder Rückrollverhinderung gewährleistet wird, dass das Fahrzeug nicht unerwünscht zurückrollt.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Unterstützung des Fahrers eines Kraftfahrzeugs, insbesondere eines Kraftfahrzeugs umfassend ein automatisiertes Getriebe oder ein Automatgetriebe bei Anfahrvorgängen vorgeschlagen, im Rahmen dessen erkannt wird, ob das Haltemoment des Fahrzeugs größer ist, als das Motorsaugmoment im aktuellen Gang.

Das Haltemoment entspricht dem unter Berücksichtigung der aktuellen Übersetzung und des Wirkungsgrades des Antriebsstrangs auf die Kupplung bzw. auf den Motor des Fahrzeugs zurückgerechneten Fahrwiderstand.

Erfindungsgemäß ist vorgesehen, dass bei Erkennung eines aktuellen Haltemomentes, das größer ist, als das Motorsaugmoment im aktuellen Gang bzw. für den Fall, dass kein Gang eingelegt bzw. angefordert ist, im ersten Vorwärtsgang, was darin resultiert, dass das erforderliche Anfahrmoment spontan nicht bereit gestellt werden kann, ein Signal ausgegeben wird, welches den Fahrer auf die erforderliche Benutzung der Feststellbremse des Fahrzeugs hinweist.

Im Rahmen einer Variante des erfindungsgemäßen Verfahrens kann vorgesehen sein, dass das Signal zum Hinweisen auf die erforderliche Benutzung der Feststellbremse des Fahrzeugs für den Fall einer Steigung unabhängig vom Wert des aktuellen Haltemomentes immer oder ab einem bestimmten Grenzwert für die Steigung ausgegeben wird. Eine Steigung wird vorzugsweise anhand eines Neigungssensors des Fahrzeugs erkannt.

Das Signal kann im Still sand des Fahrzeugs sobald ein Gang eingelegt bzw. angefordert wurde oder alternativ unabhängig vom aktuellen Gang oder von einer Schaltung im Getriebe bei Stillsand des Fahrzeugs ausgegeben werden.

Gemäß einer Weiterbildung der Erfindung ist vorgesehen, dass, wenn während des Anfahrvorgangs ausreichend Motormoment aufgebaut ist, um das Haltemoment zu kompensieren, ein weiteres bzw. geändertes Signal ausgegeben wird, welches dem Fahrer das ohne die Gefahr eines Rückrollens mögliche Lösen der Feststellbremse des Fahrzeugs anzeigt. Damit wird verhindert, dass das Fahrzeug aufgrund des zu früh erfolgten Lösens der Feststellbremse zu einem Rückrollen neigt.

Das ausgegebene Signal kann ein optisches, akustisches und/oder haptisches Signal sein. Vorzugsweise wird der Fahrer auf die erforderliche Benutzung der Feststellbremse des Fahrzeugs durch Blinken des ohnehin vorhandenen Feststellbremssymbols bzw. der Kontrollleuchte für die Feststellbremse hingewiesen. Bei betätigter Feststellbremse leuchten das Feststellbremssymbol bzw. die Kontrollleuchte kontinuierlich, wobei, wenn dem Fahrer das ohne die Gefahr eines Rückrollens mögliche Lösen der Feststellbremse des Fahrzeugs anzeigt werden soll, das Feststellbremssymbol bzw. die Kontrollleuchte für die Feststellbremse blinken.

Demnach wird durch das Blinken des Feststellbremssymbols bzw. der Kontrollleuchte die Notwendigkeit der Änderung des Zustandes der Feststellbremse angezeigt, wobei die Zustände "Feststellbremse nicht betätigt" und "Feststellbremse betätigt " durch die herkömmliche Belegung "Feststellbremssymbol bzw. Kontrollleuchte aus" und "Feststellbremssymbol bzw. Kontrollleuchte leuchten kontinuierlich" angezeigt werden. Zusätzlich zum Blinken des Feststellbremssymbols bzw. der Kontrollleuchte für die Feststellbremse kann ein akustisches und/oder haptisches Signal ausgegeben werden.

Alternativ zur Definition des optischen Signals als Blinken des Feststellbremssymbols bzw. der Kontrollleuchte für die Feststellbremse kann das optische Signal als Blinken eines eigenen Symbols bzw. einer eigenen Kontrollleuchte oder als Aktivierung einer entsprechenden Textanzeige definiert sein.

Gemäß einer Weiterbildung der Erfindung kann bei Erkennung eines aktuellen Haltemomentes, das größer ist, als das Motorsaugmoment im aktuellen Gang bzw. für den Fall, dass kein Gang eingelegt bzw. angefordert ist, im ersten Vorwärtsgang, was darin resultiert, dass das erforderliche Anfahrmoment spontan nicht bereit gestellt werden kann, zusätzlich oder alternativ zum Ausgeben eines Signals, welches den Fahrer auf die erforderliche Benutzung der Feststellbremse des Fahrzeugs hinweist, ein Signal an die Bremssteuerung des Fahrzeugs zum Einsteuern von Bremsdruck in die Betriebsbremse und/oder in die Feststellbremse übermittelt werden.

Hierbei wird der Bremsdruck der Betriebsbremse und/oder der Feststellbremse in Abhängigkeit des aktuell aufgebauten Motormomentes gesteuert, derart, dass das Fahrzeug nicht zurückrollen kann; wenn das aufgebaute Motormoment das Haltemoment kompensieren kann, nimmt der eingesteuerte Bremsdruck den Wert Null an.

Durch diese Konzeption werden im Gegensatz zu den aus dem Stand der Technik bekannten Anfahrhilfesystemen die Betriebsbremse und/oder die Feststellbremse gezielt aktiviert und nicht die vom Fahrer bereits aktivierte Bremse in ihrer Haltedauer verlängert, was in einer Erhöhung der Sicherheit für die Fahrzeuginsassen resultiert.

Diese Verfahrensvariante kann auch bei Fahrzeugen, die ein Handschaltgetriebe umfassen, durchgeführt werden, wenn diese eine entsprechende Steuerung aufweisen.

## Patentansprüche

1. Verfahren zur Unterstützung des Fahrers eines Kraftfahrzeugs, insbesondere eines Kraftfahrzeugs umfassend ein automatisiertes Getriebe oder ein Automatgetriebe bei Anfahrvorgängen, **dadurch gekennzeichnet, dass** erkannt wird, ob das Haltemoment des Fahrzeugs größer ist, als das Motorsaugmoment im aktuellen Gang, wobei bei Erkennung eines aktuellen Haltemomentes, das größer ist, als das Motorsaugmoment im aktuellen Gang bzw. für den Fall, dass kein Gang eingelegt bzw. angefordert ist, im ersten Vorwärtsgang, ein Signal ausgegeben wird, welches den Fahrer auf die erforderliche Benutzung der Feststellbremse des Fahrzeugs hinweist und/oder ein Signal an die Bremssteuerung des Fahrzeugs zum Einsteuern von Bremsdruck in die Betriebsbremse und/oder in die Feststellbremse übermittelt wird.

2. Verfahren zur Unterstützung des Fahrers eines Kraftfahrzeugs bei Anfahrvorgängen, nach Anspruch 1, **dadurch gekennzeichnet, dass** wenn während des Anfahrvorgangs ausreichend Motormoment aufgebaut ist, um das Haltemoment zu kompensieren, ein weiteres Signal ausgegeben wird, welches dem Fahrer das ohne die Gefahr eines Rückrollens mögliche Lösen der Feststellbremse des Fahrzeugs anzeigt.

3. Verfahren zur Unterstützung des Fahrers eines Kraftfahrzeugs bei Anfahrvorgängen, nach Anspruch 1 oder 2, **dadurch gekennzeichnet, dass** der Bremsdruck der Betriebsbremse und/oder der Feststellbremse in Abhängigkeit des aktuell aufgebauten Motormomentes derart gesteuert wird, dass das Fahrzeug nicht zurückrollen kann, wobei, wenn das aufgebaute Motormoment das Haltemoment kompensieren kann, der eingesteuerte Bremsdruck den Wert Null annimmt.

4. Verfahren zur Unterstützung des Fahrers eines Kraftfahrzeugs bei Anfahrvorgängen, nach Anspruch 1, 2 oder 3, **dadurch gekennzeichnet, dass** das ausgegebene Signal ein optisches, akustisches und/oder haptisches Signal ist.

5. Verfahren zur Unterstützung des Fahrers eines Kraftfahrzeugs bei Anfahrvorgängen, nach Anspruch 1, 2, 3 oder 4, **dadurch gekennzeichnet, dass** der Fahrer auf die erforderliche Benutzung der Feststellbremse des Fahrzeugs durch Blinken des ohnehin vorhandenen Feststellbremssymbols bzw. der Kontrollleuchte für die Feststellbremse hingewiesen wird, wobei bei betätigter Feststellbremse das Feststellbremssymbol bzw. die Kontrollleuchte kontinuierlich leuchten und wobei, wenn dem Fahrer das ohne die Gefahr eines Rückrollens mögliche Lösen der Feststellbremse des Fahrzeugs anzeigt werden soll, das Feststellbremssymbol bzw. die Kontrollleuchte für die Feststellbremse blinken.

6. Verfahren zur Unterstützung des Fahrers eines Kraftfahrzeugs bei Anfahrvorgängen, nach Anspruch 1, 2, 3 oder 4, **dadurch gekennzeichnet, dass** das optische Signal als Blinken eines eigenen Symbols bzw. einer eigenen Kontrollleuchte oder als Aktivierung einer entsprechenden Textanzeige definiert ist.

7. Verfahren zur Unterstützung des Fahrers eines Kraftfahrzeugs bei Anfahrvorgängen, nach einem der vorangehenden Ansprüche, **dadurch gekennzeichnet, dass** das Signal zum Hinweisen auf die erforderliche Benutzung der Feststellbremse des Fahrzeugs für den Fall einer Steigung unabhängig vom Wert des aktuellen Haltemomentes immer oder ab einem bestimmten Grenzwert für die Steigung ausgegeben wird.

8. Verfahren zur Unterstützung des Fahrers eines Kraftfahrzeugs bei Anfahrvorgängen, nach einem der vorangehenden Ansprüche, **dadurch gekennzeichnet, dass** das Signal zum Hinweisen auf die erforderliche Benutzung der Feststellbremse des Fahrzeugs im Stillsand des Fahrzeugs sobald ein Gang eingelegt bzw. angefordert wurde oder unabhängig vom aktuellen Gang oder von einer Schaltung im Getriebe bei Stillsand des Fahrzeugs ausgegeben wird.
